Europäisches Patentamt

European Patent Office

Office européen des brevets

(19)

(11) Veröffentlichungsnummer : **0 240 764**
**B1**

(12) **EUROPÄISCHE PATENTSCHRIFT**

(45) Veröffentlichungstag der Patentschrift :
24.01.90

(51) Int. Cl.⁵ : **F 16 L   5/02**

(21) Anmeldenummer : **87103556.4**

(22) Anmeldetag : **11.03.87**

(54) **Dichtelement zum Abdichten von Rohrdurchgängen.**

(30) Priorität : **09.04.86 DE 8609666 U**

(43) Veröffentlichungstag der Anmeldung :
**14.10.87 Patentblatt 87/42**

(45) Bekanntmachung des Hinweises auf die Patenterteilung : **24.01.90 Patentblatt 90/04**

(84) Benannte Vertragsstaaten :
**AT CH DE LI NL SE**

(56) Entgegenhaltungen :
**EP--A-- 0 161 557**
**DE--U-- 1 802 508**
**DE--U-- 8 121 570**
**DE--U-- 8 602 375**
**US--A-- 3 788 655**

(73) Patentinhaber : **PCI Polychemie GmbH Augsburg**
**Piccardstrasse 10**
**D-8900 Augsburg 1 (DE)**

(72) Erfinder : **Kolonko, Klaus,**
**Lorzingstrasse 8**
**D-8902 Neusäss (DE)**

(74) Vertreter : **Patentanwälte Grünecker, Kinkeldey,**
**Stockmair & Partner**
**Maximilianstrasse 58**
**D-8000 München 22 (DE)**

## Beschreibung

Die Erfindung betrifft einen elastischen Dichtlappen zum Abdichten von Rohrdurchgängen in insbesondere zu verfliesenden Wand- oder Bodenflächen, welcher in seiner Mitte eine Durchdringungsöffnung zur Rohrabdichtung aufweist.

Aus dem DE-U-86 02 375 ist ein derartiger Dichtlappen bekannt, der aus einer dichten Matte aus elastischem Bahnenmaterial besteht. Bei der Montage legt sich dieser bekannte Dichtlappen aufgrund seiner Elastizität flächig um das in den Rohrdurchgang eingesetzte Rohr und wird mit diesem sowie mit der den Rohrdurchgang begrenzenden Wand- oder Bodenfläche verklebt. In der Praxis ist es häufig erforderlich, den Dichtlappen bei der Montage durch Verformen insbesondere seines äußeren, mit der Boden- oder Wandfläche zu verklebenden Randbereichs an unterschiedliche örtliche Verhältnisse anzupassen. Infolge dabei auftretender elastischer Rückstellkräfte hat der Dichtlappen das Bestreben, in seine ursprüngliche Form zurückzukehren. Die mangelnde mechanische Verankerung des als dichte Matte ausgebildeten bekannten Dichtlappens in dem noch frischen Klebermaterial kann dieser Rückverformung häufig keinen ausreichenden Widerstand entgegensetzen, so daß sich der äußere Randbereich und/oder der innere, der Durchdringungsöffnung anliegende Randbereich des bekannten Dichtlappens aus dem vorgesehenen Verbund mit dem Klebermaterial löst oder bei bereits angehärtetem Klebermaterial diesen Verbund beschädigt. Auch aufwendige Handhabung des bekannten Dichtlappens kann diese Nachteile nicht vollständig überwinden.

Es ist Aufgabe der Erfindung, einen elastischen Dichtlappen der eingangs genannten Art zu schaffen, der bei einfacher Handhabung eine hohe Dichtwirkung erzielt.

Diese Aufgabe wird erfindungsgemäß dadurch gelöst, daß der Dichtlappen als poröses Gewebestück ausgebildet ist, an welchem zumindest einseitig eine porenverschließende, elastische Kunststoffschicht unter Freilassung eines umlaufenden Geweberandes auf das Gewebestück aufgebracht ist, wobei die Durchdringungsöffnung elastisch aufweitbar mit einer radial nach innen weisenden Dichtlippe ausgebildet ist.

Der erfindungsgemäße Dichtlappen wird aufgrund seiner porösen Gewebestruktur mechanisch im Klebermaterial verankert und auf diese Weise sicher an Ort und Stelle gehalten. Da der kritische äußere Randbereich des Dichtlappens nicht von der Kunststoffschicht abgedeckt ist, kann das Klebermaterial, aber auch Zement, falls gewünscht, diesen porösen Geweberand vollständig durchdringen und auf diese Weise eine besonders feste Verankerung erzielen. Gleichzeitig stellt das Klebermaterial die Dichtigkeit in diesem Bereich sicher, während der verbleibende Teil des Dichtlappens durch die porenverschließende elastische Kunststoffschicht seine Dichtigkeit erhält. Die Kunststoffschicht stellt wenn sie dem abzudichtenden Rohrstutzen anliegt, auch eine sehr gute Berührungsdichtung dar. Durch die elastisch aufweitbare Durchdringungsöffnung mit der nach innen weisenden Dichtlippe liegt der erfindungsgemäße Dichtlappen mit einer bestimmten Eigenspannung am Rohrstutzen an, so daß sich die Verwendung eines Klebermaterials erübrigt. Dies hat auch den Vorteil, daß nach Befestigung des Dichtlappens an der Wand der Rohrstutzen noch geringfügig seitlich verschoben oder verdreht werden kann, ohne die Abdichtung zu beeinträchtigen. Die Dichtlippe bildet sich in der Regel dadurch selbst aus, daß der Dichtlappen an seiner Durchdringungsöffnung nicht exakt radial auf den Rohrstutzen zuläuft, sondern in seiner Tendenz axial zur äußeren Oberfläche desselben verläuft. Dadurch liegt stets eine der Schnittkanten der Durchdringungsöffnung am Rohrstutzen an, was zu einer intensiven Abdichtung führt.

Vorteilhaft ist es, wenn die Breite des Geweberandes etwa dem Durchmesser der Durchdringungsöffnung entspricht. Somit ist stets für eine ausreichende Verankerung des Dichtlappens in der Wand oder dem Boden zu erzielen.

Insbesondere für Bodenabläufe, die in der Regel aus Kunststoff oder dergleichen bestehen, ist es vorteilhaft, daß an dem Dichtlappen im Bereich um die Durchdringungsöffnung herum ein starres, trichterförmiges Ablaufstück flächig, abdichtend befestigt ist. Handelt es sich um ein Kunststoff-Ablaufstück, kann die Befestigung durch Ankleben bewerkstelligt werden. Bei einem Blechablaufstück läßt sich dieses mittels eines Flansches an dem Dichtlappen anschrauben.

Eine besonders gute Elastizität des Dichtlapens wird dadurch erreicht, daß das Gewebestück aus Feinstrichgewebe besteht.

Vorteilhaft ist weiterhin, wenn beidseitig des Gewebestückes eine Kunststoffschicht aufgebracht ist. Dieser Kunststoff kann beispielsweise Weich-PVC oder ein Kunststoff mit ähnlichen Eigenschaften sein.

Eine ausreichende Größe des Dichtlappens wird günstigerweise dadurch erhalten, wenn der Durchmesser des Dichtlappens etwa dem fünf- bis zehnfachen Durchmesser der Durchdringungsöffnung entspricht. Handelt es sich um einen rechteckigen Dichtlappen, so gelten die gleichen Verhältnisse zwischen den Seitenkanten des Dichtlappens und dem Durchmesser der Durchdringungsöffnung.

Im folgenden werden Ausführungsbeispiele der Erfindung anhand einer Zeichnung näher erläutert.

Es zeigen :

Figur 1 in einer perspektivischen Ansicht zwei Einbaubeispiele eines erfindungsgemäßen Dichtelementes,

Figur 2 ein erfindungsgemäßes Dichtelement gemäß einer ersten Ausführungsform,

Figur 3 in einem Wandquerschnitt das Dichtelement gemäß der ersten Ausführungsform und

Figur 4 im Bodenquerschnitt ein Dichtelement gemäß einer zweiten Ausführungsform im eingebauten Zustand.

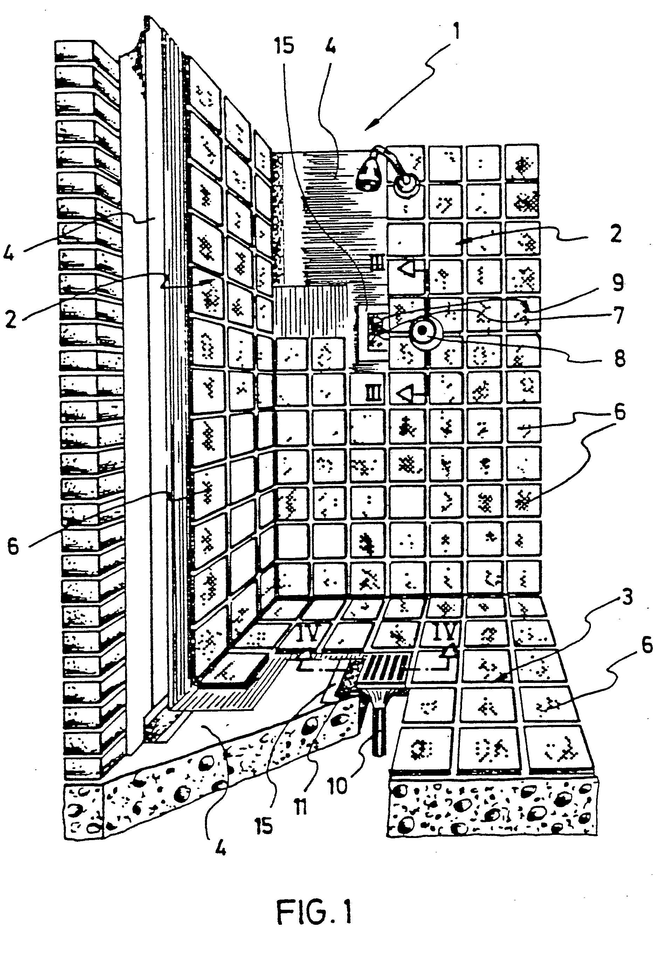

Figur 1 zeigt eine Duschecke 1, die aus gefliesten Wänden 2 und einem gefliesten Boden 3 besteht.

Der Aufbau einer Wand 2 und des Bodens 3 ist im wesentlichen derselbe. Auf einer Tragoberfläche 4 ist ein sogenannter Dichtkleber 5 als Schicht aufgetragen, in welchen die einzelnen Fliesen 6 eingelegt sind. Je nach Untergrund wird der Dichtkleber 5 in zwei Arbeitsgängen aufgetragen, um so eine besonders gute Abdichtung der Tragoberfläche 4 zu gewährleisten.

Wie aus der Figur 1 ersichtlich ist, weist die Duschecke 1 Anschlußstutzen 7 und 8 für eine hier nicht näher dargestellte Armatur, z. B. eine Mischbatterie, auf. An dem Anschluß 7 ist noch die linke Hälfte eines auf die Tragoberfläche 4 angeklebten Dichtelementes 9 einer ersten Ausführungsform zu erkennen.

In dem Boden 3 ist ein Bodenablauf 10 eingelassen. Wie aus der Figur 1 ersichtlich ist, wird der Bodenablauf von einem Dichtelement 11 umgeben. Es handelt sich hierbei um ein Dichtelement gemäß einer zweiten Ausführungsform, die noch näher erläutert werden wird.

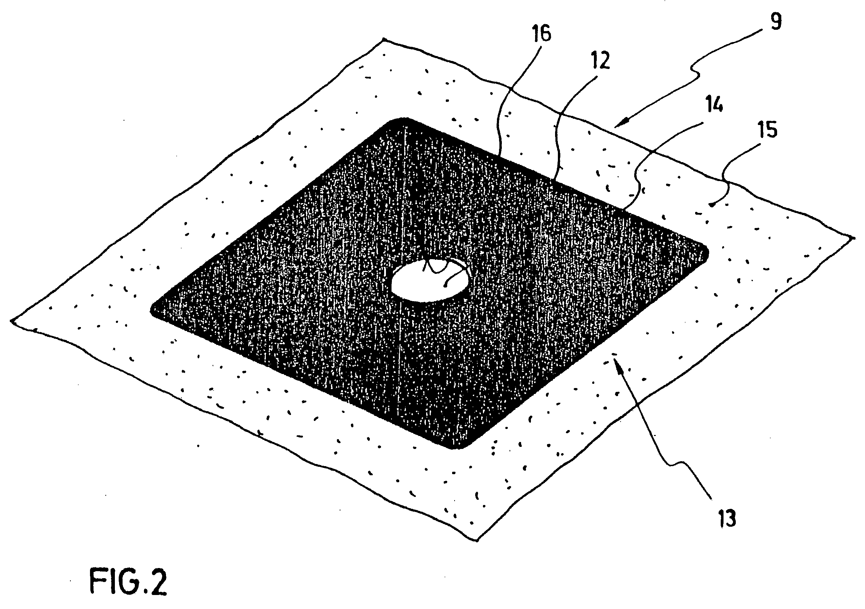

Die Figur 2 zeigt ein Dichtelement 9 gemäß der ersten Ausführungsform im nicht eingebauten Zustand. Das Dichtelement 9 ist als Dichtlappen ausgebildet, welcher in seiner Mitte eine Durchdringungsöffnung 12 aufweist. Der Dichtlappen 9 ist elastisch ausgebildet und besteht aus einem Gewebestück 13, welches mit einer die Poren des Gewebestücks verschließenden elastischen Kunststoffschicht 14 wie z. B. Weich-PVC beschichtet ist.

Die Kunststoffschicht 14 kann einseitig oder auch beidseitig auf das Gewebestück 13 aufgebracht sein. Je nach verwendetem Kunststoff ist es aber auch möglich, das Gewebestück 13 mit dem Kunststoff zu durchtränken.

Aus Figur 2 ist zu erkennen, daß die Kunststoffschicht 14 nicht die gesamte Fläche des Gewebestückes 13 bedeckt. Es verbleibt vielmehr ein freier, um die Kunststoffschicht 14 umlaufender Geweberand 15. Die Breite des Geweberandes 15 entspricht in etwa dem Durchmesser der Durchdringungsöffnung 12. Die Durchdringungsöffnung 12 wiederum weist im wesentlichen einen Durchmesser auf, der dem halben Rohrdurchmesser entspricht, für welche der Dichtlappen 9 verwendet werden soll. Die Dicke des Dichtlappens beträgt einschließlich Kunststoffbeschichtung etwa 1 bis 1 1/2 mm. Der Geweberand 15 ist entsprechend dünner ausgebildet.

Die Durchdringungsöffnung 12 selbst ist auch elastisch aufweitbar und mit einer radial nach innen weisenden Dichtlippe 16 ausgebildet. Die Dichtlippe 16 entspricht bei dieser Ausführungsform der umlaufenden Kante der Durchdringungsöffnung 12. Es ist jedoch auch möglich, eine besondere Dichtlippe 16 vorzusehen.

Der in Figur 2 dargestellte Dichtlappen besitzt eine im wesentlichen quadratische Gestalt. Die Kantenlänge beträgt etwa das Achtfache des Durchmessers der Durchdringungsöffnung. Das Gewebestück 13 ist bei den hier beschriebenen Ausführungsbeispielen aus einem Feinstrickgewebe hergestellt, welches besonders günstige elastische Eigenschaften hinsichtlich Streckbeanspruchungen aufweist.

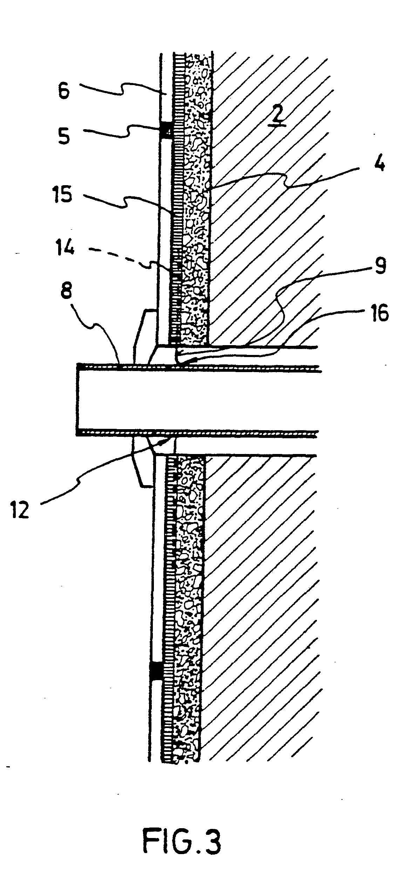

In der Figur 3 ist der Dichtlappen 9 aus der Figur 2 im eingebauten Zustand dargestellt. Es ist zu erkennen, daß auf der Tragoberfläche 4 der Wand 2 zunächst der Dichtlappen aufgebracht ist, welcher mit seiner Durchdringungsöffnung 12 über den Anschlußstutzen 8 übergestülpt ist. Die zur Durchdringungsöffnung reichenden Randbereiche des Dichtlappens 9 weisen in axialer Richtung in das Wandinnere.

Auf der Tragoberfläche 4 der Wand 2 ist dann der Dichtkleber 5 aufgebracht, welcher auch den Dichtlappen 9 bedeckt. Durch den porösen Geweberand 15 des Dichtlappens kann der Dichtkleber hindurchdringen und somit eine wirksame Verbindung des Dichtlappens 9 mit der Tragoberfläche 4 bewirken. Es ist auch möglich, daß zunächst eine Klebeschicht des Dichtklebers 5 auf die Tragoberfläche 4 der Wand 2 aufgebracht wird, bevor der Dichtlappen 9 über den Anschlußstutzen 8 geschoben wird. Ein solches Vorgehen empfiehlt sich insbesondere dann, wenn ohnehin zwei Schichten des Dichtklebers 5 aufgebracht werden. Die zweite Schicht wird dann von außen auf den Dichtlappen 9 aufgebracht.

Auf die Schicht des Dichtklebers 5 folgt dann der Belag der Fliesen 6. Der durch die gefliestе Wand 2 herausragende Anschlußstutzen 8 ist durch den Dichtlappen 9 wirksam abgedichtet.

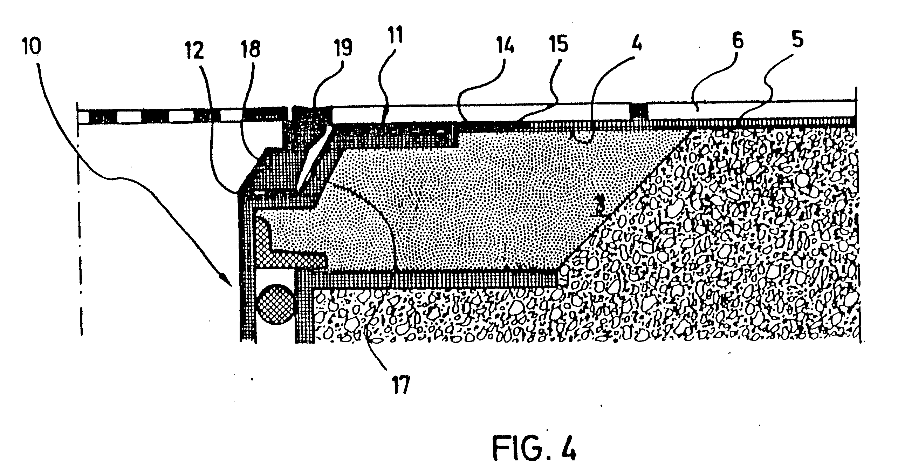

In der Figur 4 ist ein Dichtelement 11 gemäß einer zweiten Ausführungsform dargestellt. Das Dichtelement 11 ist ebenfalls wie das Dichtelement 9 der ersten Ausführungsform als Dichtlappen ausgebildet. Der Dichtlappen 11 gemäß der zweiten Ausführungsform stimmt im wesentlichen mit dem der ersten Ausführungsform überein. Es werden deshalb für gleiche und ähnliche Teile dieselben Bezugsziffern verwendet. Bei der zweiten Ausführungsform des Dichtlappens 11 ist die Durchdringungsöffnung 12 wesentlich größer ausgebildet. Genauer gesagt ist die Durchdringungsöffnung dem Durchmesser eines handelsüblichen Bodenauslaufes angepaßt. Der Dichtlappen 11 ist mit einem trichterförmigen Ablaufstück flächig und in abdichtender Weise verklebt. Somit bildet das Bodenablaufstück 17 mit dem Dichtlappen 11 eine Einheit. Über den äußeren Umfang des Ablaufstückes 17 hinaus ragt noch ein Teil des kunststoffbeschichteten Teiles des Dichtlappens 11, an welchen sich dann der Geweberand 15 anschließt. In das Bodenablaufstück 17 ist ein herkömmlicher Siebträger 18 eingebaut, welcher über eine dauerelastische Verfugung 19, beispielsweise aus Silikonkautschuk mit einer angrenzenden Fliese 6 in Verbindung steht.

Der über den äußeren Rand des Ablaufstückes 17 überstehende Teil des Dichtlappens 11 gemäß der zweiten Ausführungsform ist in gleicher Weise an die Tragoberfläche 4 des Bodens 3 angebracht, wie der Dichtlappen 9 der ersten Ausführungsform.

Im folgenden wird anhand der ersten Ausführungsform beschrieben, wie die Abdichtung zwischen einem Rohrdurchgang und einer gefliesten Wand erreicht wird. In Figur 1 sind dazu die einzelnen Schritte ersichtlich. Zunächst wird auf die Tragoberfläche 4 der Wand 2 ein Dichtkleber 5 aufgegeben. Sodann wird über einen Anschlußstutzen 7 ein Dichtlappen 9 mit seiner Durchdringungsöffnung 12 übergestülpt. Die Durchdringungsöffnung 12 wird soweit auf den Rohrstutzen aufgeschoben, daß sie axial ins Wandinnere zeigt. Dabei wird der Geweberand 15 des Dichtlappens 9 in den Dichtkleber 5 eingedrückt, so daß der Dichtkleber 5 das Gewebe durchdringt.

Anschließend wird die zweite Schicht des Dichtklebers 5 auf die erste Schicht aufgebracht, wobei dann die Oberfläche des Dichtlappens 9 mit dem Dichtkleber abgespachtelt wird, so daß eine glatte Klebeschicht entsteht. In diese Klebeschicht werden dann die Fliesen 6 in herkömmlicher Weise eingelegt und somit an die Wand 2 angeklebt.

Werden nun nachträglich Mischarmaturen an den Anschlußstutzen 7 oder 8 angebracht, so spielt es für die Erhaltung der Dichtwirkung keine Rolle, ob beim Anbringen einer Armatur ein Anschlußstutzen 7 bzw. 8 verdreht wird, da zwischen dem Anschlußstutzen und dem Dichtlappen 9 ohnehin lediglich eine Berührungsdichtung vorgesehen ist. Auch ein seitlicher Versatz, wie er in sehr geringen Grenzen noch möglich ist, beeinflußt die Dichtwirkung des Dichtlappens nicht.

Die äußeren Abmaße eines Dichtlappens 9 sollten auch nicht zu groß gewählt werden. Die Kantenlänge des in dem ersten Ausführungsbeispiel der Erfindung beschriebenen Dichtlappens 9 beträgt ungefähr 12 cm.

## Patentansprüche

1. Elastischer Dichtlappen zum Abdichten von Rohrdurchgängen in insbesondere zu verfliesenden Wand- oder Bodenflächen, welcher in seiner Mitte eine Durchdringungsöffnung (12) zur Rohrabdichtung aufweist, dadurch gekennzeichnet, daß der Dichtlappen (9, 11) als poröses Gewebestück (13) ausgebildet ist, an welchem zumindest einseitig eine porenverschließende, elastische Kunststoffschicht (14) unter Freilassung eines umlaufenden Geweberandes (15) auf das Gewebestück (13) aufgebracht ist, wobei die Durchdringungsöffnung (12) elastisch aufweitbar mit einer radial nach innen weisenden Dichtlippe (16) ausgebildet ist.

2. Dichtlappen nach Anspruch 1, dadurch gekennzeichnet, daß die Breite des Geweberandes (15) etwa dem Durchmesser der Durchdringungsöffnung (12) entspricht.

3. Dichtlappen nach Anspruch 1 oder 2, dadurch gekennzeichnet, daß das Gewebestück (13) aus Feinstrickgewebe besteht.

4. Dichtlappen nach einem der Ansprüche 1 bis 3, dadurch gekennzeichnet, daß beidseitig des Gewebestückes (13) eine Kunststoffschicht (14) aufgebracht ist.

5. Dichtlappen nach einem der Ansprüche 1 bis 4, dadurch gekennzeichnet, daß der Durchmesser des Dichtlappens (9) etwa dem fünf- bis zehnfachen Durchmesser der Durchdringungsöffnung (12) entspricht.

6. Dichtlappen nach einem der Ansprüche 1 bis 5, dadurch gekennzeichnet, daß an dem Dichtlappen (11) im Bereich um die Durchdringungsöffnung (12) herum ein starres trichterförmiges Ablaufstück (17) flächig abdichtend befestigt werden kann.

## Claims

1. Elastic sealing cloth for sealing of pipe passages, in particular in wall or floor surfaces to be tiled, which has a passage opening (12) in its centre for sealing of pipes, characterised in that the sealing cloth (9, 11) is of a porous woven material (13) onto which is applied at least on one side a pore-sealing, elastic plastics material layer (14) whilst retaining a surrounding woven edge (15) whereby the passage opening (12) is elastically expandable and includes an inwardly directed sealing lip (16).

2. Sealing cloth according to claim 1, characterised in that the breadth of the woven edge (15) corresponds approximately with the diameter of the passage opening (12).

3. Sealing cloth according to claim 1 or 2, characterised in that the woven material (13) is of fine-woven construction.

4. Sealing cloth according to one of the claims 1 to 3, characterised in that a plastics material layer (14) is applied to both sides of the woven material.

5. Sealing cloth according to one of the claims 1 to 4, characterised in that the diameter of the sealing cloth (9) is approximately five to ten times the diameter of the passage opening (12).

6. Sealing cloth according to one of the claims 1 to 5, characterised in that a rigid funnel-shaped draining-off member (17) can be surface-sealingly attached to the sealing cloth (11) in the area around the passage opening (12).

## Revendications

1. Etoffe élastique d'étanchéité destinée à étanchéifier des passages tubulaires dans des parois ou des sols qui doivent être en particulier carrelés et présentant au milieu une ouverture de pénétration (12) pour étanchéifier le tuyau, caractérisée en ce que l'étoffe d'étanchéité (9, 11) est réalisée sous forme de pièce tissée poreuse (13) sur laquelle une couche de matière plastique (14) élastique, obturant les pores est déposée au moins d'un côté en laissant libre un bord de tissu circulaire (15), l'ouverture de pénétration (12) étant réalisée de manière à pouvoir être élargie élastiquement et étant munie d'une lèvre d'étanchéité (16) orientée radialement vers l'intérieur.

2. Etoffe d'étanchéité selon la revendication 1, caractérisée en ce que la largeur du bord de tissu (15) correspond à peu près au diamètre de l'ouverture de pénétration (12).

3. Etoffe d'étanchéité selon la revendication 1 ou 2, caractérisée en ce que la pièce de tissu (13) est composée d'un tissu à mailles fines.

4. Etoffe d'étanchéité selon l'une des revendications 1 à 3, caractérisée en ce qu'une couche de matière plastique (14) est déposée de part et d'autre de la pièce de tissu (13).

5. Etoffe d'étanchéité selon l'une des revendications 1 à 4, caractérisée en ce que le diamètre de l'étoffe d'étanchéité (9) représente à peu près entre 5 et 10 fois le diamètre de l'ouverture de pénétration (12).

6. Etoffe d'étanchéité selon l'une des revendications 1 à 5, caractérisée en ce qu'une pièce rigide d'évacuation (17) en forme d'entonnoir peut être fixée avec effet d'étanchéité, à plat sur l'étoffe d'étanchéité (11) dans la zone située autour de l'ouverture de pénétration (12).

FIG.1

FIG.2

EP 0 240 764 B1

FIG.3

FIG. 4

EP 0 240 764 B1